# FASCICULE DE BREVET EUROPEEN

(11) **EP 1 702 472 B1**
(45) Date de publication et mention de la délivrance du brevet: **26.09.2007**
(21) Numéro de dépôt: 04816493.3
(22) Date de dépôt: 30.12.2004
(51) Int. Cl.: H04N 7/32, H04N 9/64

(54) **PROCEDE ET SYSTEME DE DETERMINATION DU DEPLACEMENT D UN PIXE L, ET SUPPORT D ENREGISTREMENT POUR LA MISE EN OEUVRE DU PRO CEDE**
VERFAHREN UND SYSTEM ZUR BESTIMMUNG DER VERSCHIEBUNG EINES PIXELS UND AUFZEICHNUNGSMEDIUM DAFÜR
METHOD AND SYSTEM FOR DETERMINING DISPLACEMENT OF A PIXEL AND RECORDING MEDIUM THEREFOR

(30) Priorité: 06.01.2004 FR 0400063
(43) Date de publication de la demande: 20.09.2006
(73) Titulaire: Thomson Licensing, S.A., 92100 Boulogne-Billancourt (FR)
(72) Inventeur: BLONDE, Laurent, F-35235 Thorigne-Fouillard (FR); SAHUC, David, F-35000 Rennes (FR); KERBIRIOU, Paul, F-35235 Thorigne-Fouillard (FR)
(74) Mandataire: Blot, Philippe Robert Emile
(86) Numéro de dépôt international: PCT/FR2004/003417
(87) Numéro de publication internationale: WO 2005/076628

(56) Documents cités:
- US-A- 6 141 041

## Description

L'invention concerne un procédé et un système de détermination du déplacement d'un pixel entre deux images ainsi qu'un procédé de synthèse d'image et un support d'enregistrement d'informations pour la mise en oeuvre du procédé.

Plus précisément, l'invention concerne un procédé de détermination du déplacement d'un pixel entre une première et une deuxième images, la première image étant synthétisée à partir d'une première scène contenant un objet et un point de prise de vue donné, et la deuxième image étant synthétisée à partir d'une deuxième scène contenant le même objet, cette deuxième scène étant obtenue à partir de la première scène en déplaçant l'objet dans la première scène et/ou en déplaçant le point de prise de vue de la première scène.

Pour de nombreux traitements numériques d'images, il est nécessaire de connaître la position d'un point d'un objet dans une première image et la position de ce même point dans une seconde image. Par exemple, ces informations sont utilisées pour déterminer un vecteur de déplacement de ce point entre la première et la seconde images, c'est-à-dire l'amplitude et la direction du déplacement ou de la translation de ce point entre ces deux images.

L'ensemble des vecteurs de déplacement de tous les points d'un objet ou d'une image est appelé champs de vecteurs de déplacement.

Ces champs ou vecteurs de déplacement sont notamment utilisés dans des procédés de construction d'images intermédiaires à l'aide de processus d'interpolation temporelle.

Par exemple, dans des procédés de synthèse d'images connus, un module de synthèse fournit uniquement en sortie des images telles que des images planes d'une scène définie en trois dimensions. Ainsi, actuellement, pour déterminer la position initiale d'un pixel dans la première image et sa position finale dans la seconde image, un module de calcul dédié à cette tâche doit être utilisé en plus du module de synthèse. A cet effet, ce module de calcul travaille directement sur les données définissant la scène tridimensionnelle, c'est-à-dire sur les mêmes données que celles traitées par le module de synthèse.

Par exemple, le module de calcul établit la position finale d'un pixel à partir d'informations sur le déplacement des objets dans une scène entre des instants où sont prises une première et une deuxième images ainsi qu'à partir d'informations sur le déplacement du point de prise de vue entre ces mêmes instants. Ces calculs sont longs et compliqués de sorte que le module de calcul est lui-même complexe et lent.

L'invention vise à remédier à cet inconvénient en proposant un procédé de détermination du déplacement d'un pixel entre une première et une deuxième images permettant de simplifier le module de calcul.

L'invention a donc pour objet un procédé tel que décrit ci-dessus,
caractérisé :
- en ce qu'il comporte avant la synthèse de la deuxième image, une étape de définition de la couleur d'au moins un point de l'objet dans la deuxième scène en fonction de la position de ce point dans la première scène de manière à ce que la couleur du pixel de la deuxième image correspondant à ce point indique la position de ce point dans la première image, cette étape de définition comportant :

- une opération de projection sur l'objet de la deuxième scène d'une troisième image constituée d'un ensemble de pixels, dans laquelle la couleur de chaque pixel indique sa position dans cette troisième image, cette troisième image étant projetée à partir d'un projecteur dont la position relative par rapport à l'objet qu'il éclaire dans la deuxième scène est choisie pour être la même que la position relative du point de prise de vue par rapport à cet objet dans la première scène,
- une opération de modification des aspects de surface de l'objet éclairé de manière à ce que la surface de cet objet diffuse l'éclairage du projecteur vers le point de prise de vue, et
- une opération de suppression des sources de lumière parasites susceptibles de modifier la couleur diffusée par un ou plusieurs points de l'objet, et
- en ce qu'après la synthèse de la deuxième image à partir de la deuxième scène dans laquelle la couleur d'au moins un point de l'objet a été définie lors de l'étape de définition, il comporte pour ce ou chaque point de l'objet :

- une opération de relevé de la position et de la couleur d'un pixel de la deuxième image correspondant à ce point,
- une opération de déduction de la position du point de l'objet dans la première image à partir de la couleur relevée, et
- une opération de détermination du déplacement de ce pixel à partir de la position relevée dans la deuxième image et de la position déduite de la couleur du pixel.

Grâce à cette deuxième image, la détermination de la position initiale et de la position finale d'un point d'un objet est simplifiée car il suffit pour cela de relever la position et la couleur d'un pixel dans la deuxième image pour connaître la position du point de l'objet correspondant respectivement dans la deuxième image et dans la première image. Le module de calcul n'a donc plus à effectuer des calculs compliqués pour déterminer ces informations. On notera de plus que le module de calcul ne travaille plus sur les données d'entrées du module de synthèse, c'est-à-dire les données définissant la scène tridimensionnelle, mais uniquement sur une image, c'est-à-dire des données bidimensionnelles.

L'invention a également pour objet un procédé de synthèse d'images chaque image étant formée d'un ensemble de pixels, ce procédé comportant :
- une première étape synthèse d'une première image à partir d'une première scène, la première image représentant, en outre, un objet dans la première scène prise à partir d'un point de prise de vue donné, et
- une deuxième étape synthèse d'une deuxième image à partir d'une deuxième scène, cette deuxième scène étant obtenue à partir de la première scène en déplaçant l'objet dans la première scène et/ou en déplaçant le point de prise de vue de la première scène,
- une étape de détermination du déplacement d'au moins un pixel entre les première et deuxième images, cette étape étant réalisée en mettant en oeuvre un procédé de détermination du déplacement d'un pixel conforme à l'invention, et
- une étape de construction par interpolation temporelle d'au moins une image intermédiaire entre les première et deuxième images synthétisées à l'aide des informations sur le déplacement du ou de chaque pixel précédemment déterminé.

L'invention a également pour objet un support d'enregistrement d'informations, caractérisé en ce qu'il comporte des instructions pour la mise en oeuvre du procédé de détermination ou de synthèse conforme à l'invention lorsque ces instructions sont exécutées par un calculateur électronique.

L'invention a également pour objet un système de détermination du déplacement d'un pixel entre une première et une deuxième images de synthèse, lesdites images étant constituées d'un ensemble de pixels, la première image étant synthétisée à partir d'une première scène contenant un objet et un point de prise de vue donné, et la deuxième image étant synthétisée à partir d'une deuxième scène contenant le même objet, cette deuxième scène étant obtenue à partir de la première scène en déplaçant l'objet dans la première scène et/ou en déplaçant le point de prise de vue de la première scène, ce système comportant :
- un module de synthèse d'images propre à générer des images à partir d'une scène tridimensionnelle, et
- un module de commande apte à activer une première fois le module de synthèse pour générer la première image à partir de la première scène, et à activer une deuxième fois le module de synthèse pour générer la deuxième image à partir de la deuxième scène,
caractérisé :
- en ce que le module de commande est apte à définir automatiquement la couleur d'au moins un point de l'objet dans la deuxième scène en fonction de la position de ce point dans la première scène de manière à ce que la couleur du pixel de la deuxième image correspondant à ce point indique la position de ce pixel dans la première image, le module de commande étant apte pour cela à réaliser :

- une opération de projection sur l'objet de la deuxième scène d'une troisième image constituée d'un ensemble de pixels, dans laquelle la couleur de chaque pixel indique sa position dans cette troisième image, cette troisième image étant projetée à partir d'un projecteur dont la position relative par rapport à l'objet qu'il éclaire dans la deuxième scène est choisie pour être la même que la position relative du point de prise de vue par rapport à cet objet dans la première scène,
- une opération de modification des aspects de surface de l'objet éclairé de manière à ce que la surface de cet objet diffuse l'éclairage du projecteur vers le point de prise de vue, et
- une opération de suppression des sources de lumière parasites susceptibles de modifier la couleur diffusée par un ou plusieurs points de l'objet, et
- en ce que le système comporte un module de calcul du déplacement d'au moins un pixel entre les première et deuxième images apte pour le ou chaque point de l'objet à :

- relever la position et la couleur d'un pixel de la deuxième image correspondant à ce point,
- déduire la position du point de l'objet dans la première image à partir de la couleur relevée, et
- déterminer le déplacement de ce pixel à partir de la position relevée dans la deuxième image et de la position déduite de la couleur du pixel.

L'invention sera mieux comprise à la lecture de la description qui va suivre donnée uniquement à titre d'exemple et faite en se référant aux dessins sur lesquels :
- la figure 1 est une illustration schématique de l'architecture d'un système conforme à l'invention,
- les figures 2 et 3 sont respectivement des vues en perspective d'une scène tridimensionnelle,
- les figures 4 et 5 sont respectivement des images planes correspondant aux scènes tridimensionnelles des figures 2 et 3,
- la figure 6 est un organigramme d'un procédé conforme à l'invention,
- la figure 7 est une vue en perspective de la scène tridimensionnelle de la figure 3,
- la figure 8 est une illustration schématique d'une image projetée sur la scène de la figure 7, et
- la figure 9 est une image plane correspondant à la scène de la figure 7.

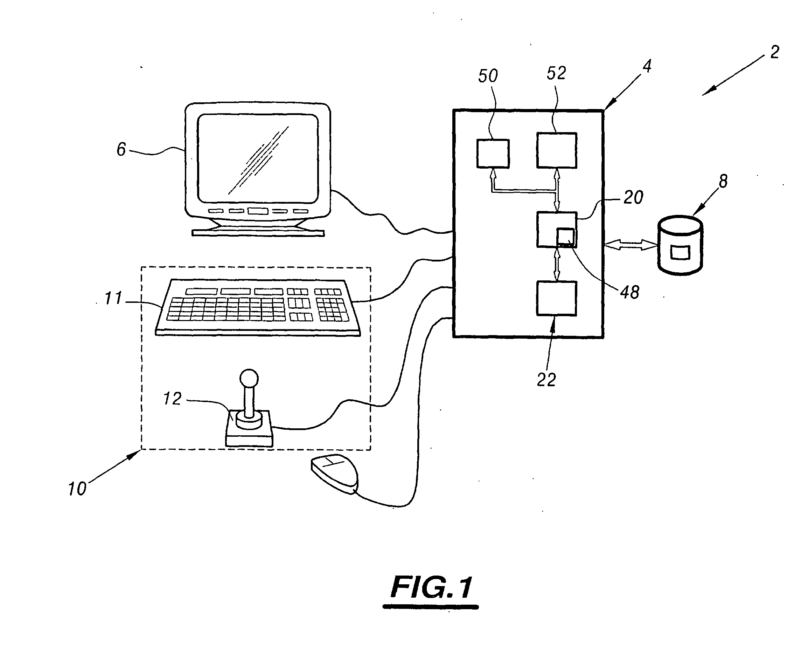

La figure 1 représente un système électronique de synthèse d'images désigné par la référence générale 2. Ce système 2 comporte un calculateur électronique 4, tel qu'une unité centrale d'un ordinateur conventionnel, associé à un écran de visualisation 6 et à une mémoire 8.

Le système 2 comporte également une interface homme/machine 10 permettant à un utilisateur de saisir des commandes de déplacement d'objets. A titre d'exemple cette interface 10 est ici formée d'un clavier alphanumérique 11 et d'un levier 12 de commande plus connu sous le terme anglais de "joystick".

Le calculateur 4 comporte un module 20 de synthèse d'images numériques et un module 22 de commande de ce module 20.

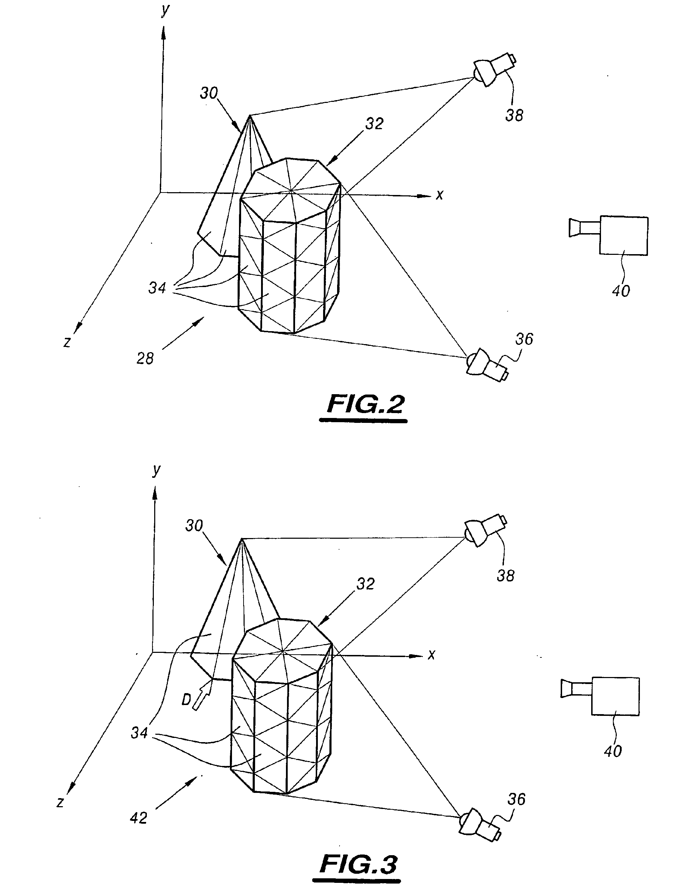

Le module 22 est apte à définir un modèle numérique d'une scène tridimensionnelle telle qu'une scène 28 représentée en perspective sur la figure 2 à un instant T.

A titre d'exemple, la scène tridimensionnelle utilisée pour illustrer la présente description comporte seulement deux objets, c'est-à-dire ici un cône 30 et un cylindre 32.

La forme géométrique de chaque objet est définie par un assemblage de plusieurs facettes contiguës les unes aux autres. Ici, sur la figure 2, ces facettes sont représentées par des triangles 34.

Chaque facette de chaque objet présente un aspect de surface. Cet aspect de surface est réglable. Par exemple, la texture ou la matière de cette facette, son coefficient de réflexion de la lumière, sa diffusivité sont réglables.

Typiquement, une scène comporte également un ou plusieurs projecteurs destinés à éclairer les objets de la scène. Ici, à titre d'illustration deux projecteurs 36 et 38 sont représentés sur la figure 2.

Pour chaque projecteur il est possible de définir sa position, son orientation, son champ de vision ainsi que l'image projetée sur la scène. De plus il est possible de définir la directivité du projecteur, c'est-à-dire, par exemple, les facettes de chaque objet qui seront éclairées par ce projecteur.

Finalement, une scène comporte au moins un point de prise de vue représenté ici par une caméra 40. La position, l'orientation ainsi que le champ de vision de cette caméra 40 sont réglables.

Ici, la position des objets, des projecteurs et de la caméra est définie par rapport à un repère orthonormé fixe représenté par les axes X, Y, Z dans la figure 2.

Le module de commande 22 permet à l'utilisateur de régler les différents paramètres de cette scène et, en particulier de déplacer les objets, le point de prise de vue ou la position des projecteurs.

Par exemple, la figure 3 représente une scène 42 correspondant à la scène 28 à un instant T+1 après que le cône 30 ait été déplacé le long de l'axe Z alors que le cylindre 32 est demeuré immobile. Cette commande de déplacement du cône 30 a, par exemple, été générée par l'utilisateur à l'aide du levier de commande 12. Ce déplacement est noté D et représenté par une flèche D sur la figure 3.

Le module de synthèse 20 est capable de générer une image à deux dimensions de la scène définie par le module de commande 22. Plus précisément, le module 20 est apte à générer l'image de la scène tridimensionnelle que filme la caméra 40. Par exemple, le module 20 met en oeuvre à cet effet un procédé connu réalisé à l'aide de la technologie Open GL. Des informations sur cette technologie peuvent être obtenues en ligne à partir de l'adresse suivante :hftp://developer.apple.com/documentation/GraphicsImagi ng/Conceptual/OpenGL/chap2/chapter_2_section_3.html

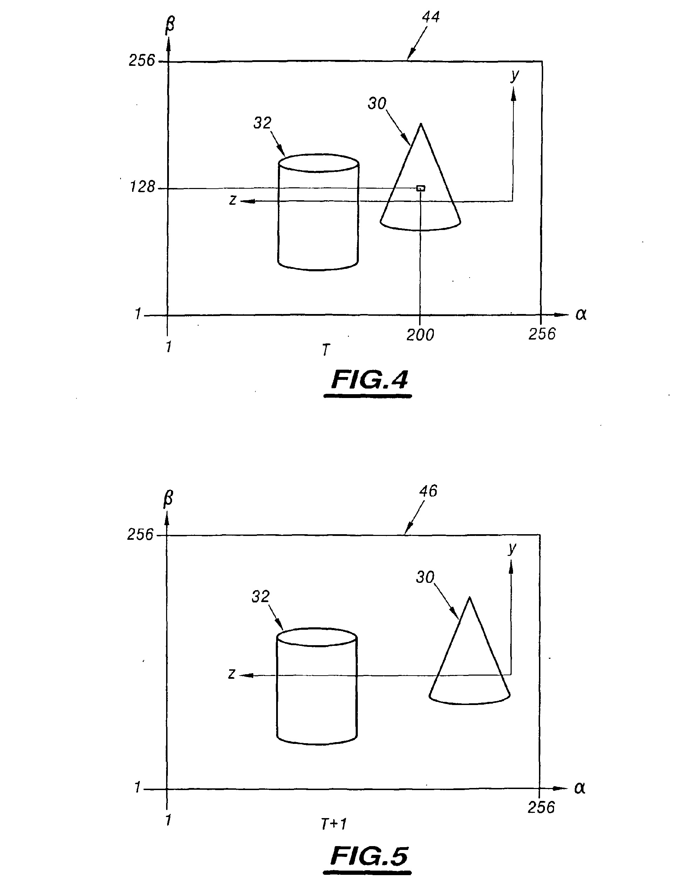

Les figures 4 et 5 représentent des images 44 et 46 synthétisées par le module 20 respectivement pour les scènes 28 et 42.

Dans les images 44 et 46 les axes Y et Z correspondent à ceux du repère orthonormé des scènes 28 et 42.

Les images synthétisées par le module 20 sont propres à être affichées sur l'écran 6. Par exemple, ici ces images sont des images de 256 pixels par 256 pixels.

Sur les figures 4 et 5 est représenté un repère orthonormé α, β gradué en nombre de pixels et dont l'origine correspond au pixel dans l'angle inférieur gauche de l'image. Ce repère orthonormé α, β permet de définir la position de chaque pixel de l'image par un couple de coordonnées (i,j) où i et j correspondent aux coordonnées du pixel respectivement sur les axes α et β.

Le module 20 comporte également un sous-module 48 de lissage des couleurs. En effet, lorsque la surface d'un point d'un objet correspondant à un pixel comporte deux couleurs différentes séparées par une frontière, il est nécessaire d'adopter une règle qui permet au module 20 d'affecter une seule couleur à ce pixel. Ici, dans une telle situation, le sous-module 48 agit de manière à lisser cette différence de couleurs et choisit donc une couleur intermédiaire entre les couleurs présentes de part et d'autre de la frontière. Plus précisément, le sous-module 48 détermine cette couleur intermédiaire à affecter au pixel par interpolation linéaire.

Le calculateur 4 comporte également un module 50 de calcul d'un champ de vecteurs de déplacement ainsi qu'un module 52 de construction d'images intermédiaires.

Le module 50 est destiné à calculer le vecteur de déplacement des pixels entre deux images synthétisées successives. Par exemple, ce module 50 est apte à calculer le vecteur de déplacement de tous les pixels de l'image 44 entre les instants T et T+1.

Le module 52 est capable de calculer des images intermédiaires représentant la scène filmée par la caméra 40 à un instant intermédiaire entre les instants T et T+1. A cet effet, le module 52 met en oeuvre un processus d'interpolation temporelle connu, tel que celui décrit dans le brevet EP 0 294 282 B1.

Finalement, le calculateur 4 est apte à commander l'affichage sur l'écran 6 d'une séquence temporelle d'images ordonnée ou séquence vidéo formée par les images synthétisées par le module 20 entre lesquelles sont intercalées des images intermédiaires construites par le module 52.

Ici, le calculateur 4 est un calculateur électronique programmable conventionnel et les différents modules 20, 22, 50 et 52 sont, par exemple, des modules logiciels.

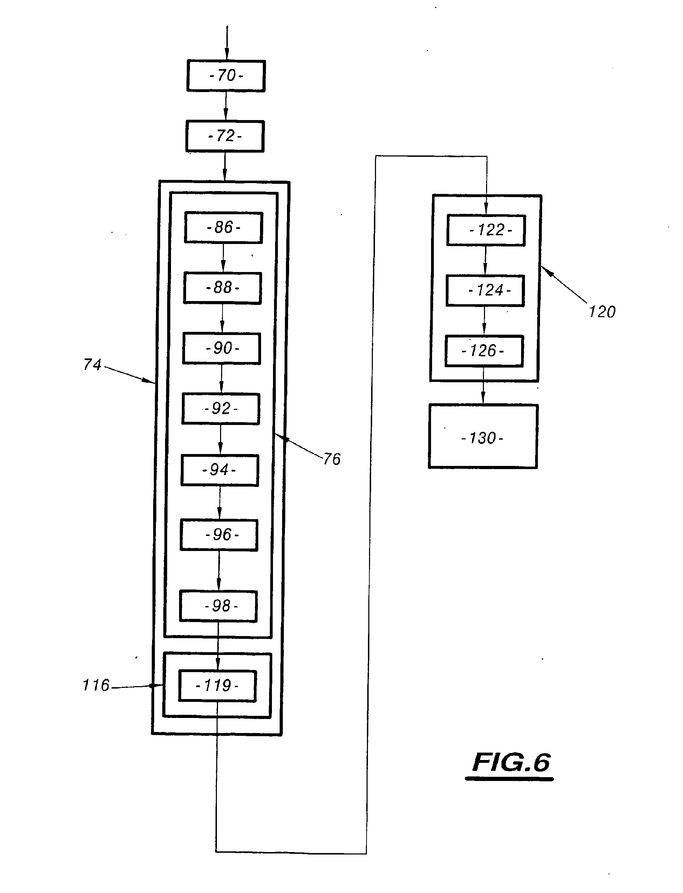

Les instructions correspondant à ces modules logiciels sont, par exemple, enregistrées dans la mémoire 8. Ces instructions sont adaptées à l'exécution du procédé de la figure 6.

Le fonctionnement du système 2 va maintenant être décrit en regard de la figure 6 et dans le cas particulier des scènes 28 et 42.

Initialement, le module 20 synthétise lors d'une étape 70, l'image 44 à partir de la scène 28 définie par le module de commande 22.

Ensuite, le module 20 synthétise, lors d'une étape 72, l'image 46 à partir de la scène 42 définie par le module de commande 22.

Le système 2 procède alors à une étape 74 de génération d'une troisième image, par exemple, identique à la seconde image 46 à l'exception du fait que chaque pixel d'un objet présente une couleur fonction de la place qu'occupait à l'instant T le point de l'objet correspondant à ce pixel.

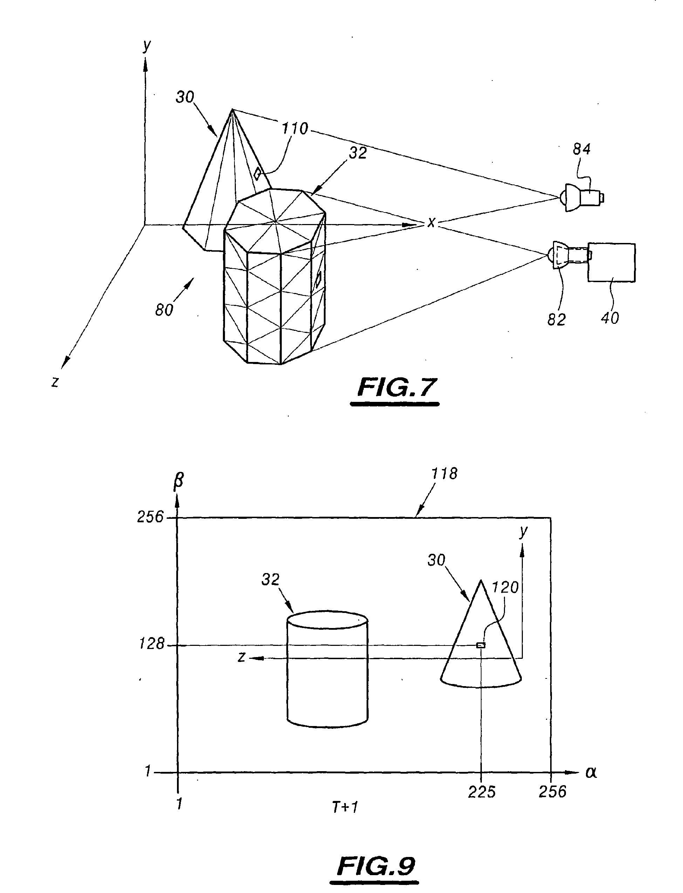

A cet effet, le module 22 définit automatiquement, lors d'une opération 76, une troisième scène 80 (figure 7). Cette scène 80 est identique géométriquement à la scène 42 à l'exception de la position des projecteurs.

De préférence, cette scène 80 est construite à partir de la scène 42 pour conserver à l'identique la position des objets 30 et 32 et de la caméra 40.

Pour construire la scène 80 à partir de la scène 42, le module 22 supprime lors d'une sous-opération 86, tous les projecteurs ou sources de lumière de la scène 42. Ensuite, lors d'une sous-opération 88, le module 22 affecte à tous les objets de la scène 42 le même aspect de surface. L'aspect de surface est ici choisi de manière à ce que la surface de tous les objets soit parfaitement diffusante, c'est-à-dire que la surface ne modifie pas la couleur de la lumière qu'elle renvoie et qu'elle la répartit dans tout l'espace avec la même valeur. Ainsi, lorsqu'un point d'un objet est éclairé avec un faisceau rouge, ce point diffuse dans tout l'espace une lumière exactement du même rouge.

Ensuite, le module 22 crée, lors d'une sous-opération 90, un projecteur pour chaque partie ou objet statique dans la scène et un projecteur pour chaque objet mobile de la scène. Les objets ou parties statiques sont les parties ou objets qui ne se sont pas déplacés entre l'instant T et l'instant T+1, par exemple ici le cylindre 32. Les objets mobiles sont, au contraire, les objets qui se sont déplacés entre l'instant T et l'instant T+1. De préférence on affectera un seul et même projecteur à un groupe de plusieurs objets mobiles si la position relative de ces objets les uns par rapport aux autres reste inchangée entre l'instant T et l'instant T+1.

Ici, un projecteur 82 est créé pour éclairer le cylindre 32 tandis qu'un projecteur 84 est créé pour éclairer le cône 30.

Le module 22 règle, lors de la sous-opération 90, la directivité des projecteurs 82 et 84 de manière à ce que ceux-ci n'éclairent que les facettes de l'objet auquel ils sont associés qui sont visibles sur l'image 44.

Lors d'une sous opération 92, le module 22 détermine la position de chaque projecteur vis-à-vis de l'objet qu'il éclaire. A cet effet, la position de chaque projecteur vis-à-vis de l'objet qu'il éclaire est choisie de manière à ce que cette position soit identique à celle qu'occupe la caméra 40 vis-à-vis de ce même objet dans la scène 28. Par conséquent, puisqu'ici, ni la position du cylindre 32 ni la position de la caméra 40 n'ont été modifiées entre les instants T et T+1, le projecteur 82 qui éclaire le cylindre 32 est placé à la même position que la caméra 40. Par contre, pour que le projecteur 84 soit placé vis-à-vis du cône 30 à la même position que la caméra 40 dans la scène 28, la position du projecteur 84 est décalée d'une distance D le long de l'axe Z à partir de la position de la caméra 40. Cette distance D est identique à l'amplitude du déplacement D du cône 30.

Ainsi, le projecteur 84 reste, en quelque sorte, immobile par rapport au cône 30 malgré le déplacement de celui-ci entre les instants T et T+1.

Cette façon de procéder pour placer les projecteurs de la scène 80 permet de créer une relation entre la position dans l'image 44 des points de chaque objet éclairé par le projecteur et la couleur avec laquelle ces points seront éclairés lors d'une des sous-opérations suivante. De plus, le choix consistant à placer le projecteur vis-à-vis de l'objet qu'il éclaire dans la même position que celle qu'occupe la caméra 40 à l'instant précédent, c'est-à-dire l'instant T, permet de maximiser la surface éclairée de l'objet utilisable pour la détermination, par exemple, de champs de vecteurs de déplacement.

Lors d'une sous-opération 94, le champ de vision de chaque projecteur est réglé pour correspondre à celui de la caméra 40 à l'instant T, puis, lors d'une sous-opération 96, chaque projecteur est également orienté comme la caméra 40 à l'instant T.

Finalement, lors d'une sous-opération 98, le module 22 définit l'image projetée par chaque projecteur sur l'objet qu'il éclaire. Dans l'image projetée, la couleur de chaque pixel est reliée par une fonction biunivoque à la position de ce pixel dans cette image de sorte que la couleur du pixel indique sa position ou, en d'autres termes, identifie la ligne et la colonne du pixel dans l'image.

Le nombre de couleurs possibles est supérieur au nombre de pixels des images synthétisées et de préférence au moins 2, 3 ou 4 fois supérieur au nombre de pixels des images synthétisées. Pour simplifier la description, chaque couleur est représentée par un couple de valeurs (k, l) où k représente, par exemple, la quantité de rouge et l la quantité, par exemple, de vert. Dans l'exemple décrit ici, on suppose qu'il existe trois fois plus de couleurs possibles que de pixels. Ainsi, puisque les images synthétisées sont des images de 256/256 pixels, la quantité maximale de rouge ou de vert sera représentée par la valeur 768 tandis que la quantité minimale sera représentée par la valeur 1, les valeurs k et l pouvant prendre toutes les valeurs entières comprises entre 1 et 768.

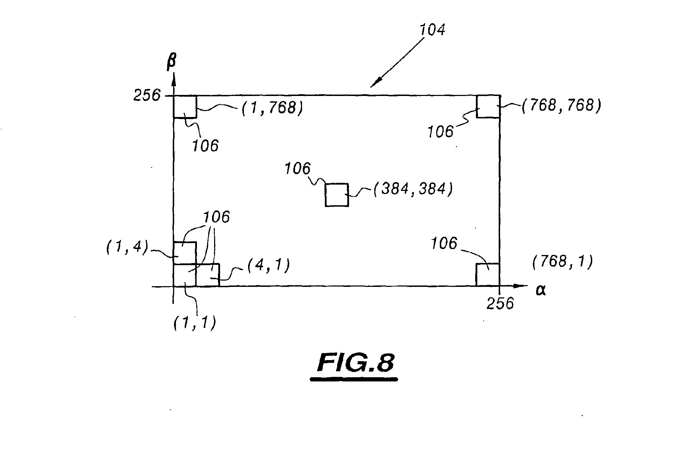

Ici, tous les projecteurs de la scène 80 projettent la même image c'est-à-dire une image 104 (figure 8). La figure 8 comporte un repère α, β identique à celui des figures 4 et 5 de manière à repérer la position des pixels de l'image 104. A titre d'illustration, seuls quelques pixels de cette image 104 sont représentés par des carrés 106. Les couleurs associées à chacun de ces pixels sont représentées par un couple de valeurs (k, l) indiqué entre parenthèses sur cette figure. Les couleurs associées aux pixels de l'image 104 sont organisées de façon à créer un gradient de couleurs le long de l'axe α et le long de l'axe β. Ainsi, le pixel situé sur l'origine des axes α et β est associé à la couleur (1,1). A partir de ce pixel, les valeurs du paramètre k affectées à chaque pixel de l'image 104 forment une progression géométrique de raison 3 en allant de la gauche vers la droite le long de l'axe α. De façon similaire, les valeurs du paramètre 1 de chaque pixel forment une progression géométrique de raison 3 le long de l'axe β et en s'éloignant du pixel ayant la couleur (1,1).

Ainsi, le pixel situé à l'angle supérieur droit, c'est-à-dire celui placé à l'intersection de la 256^{ème} ligne et de la 256^{ème} colonne de pixels, est associé à la couleur (768,768). Dès lors, dans l'image 104, connaissant la couleur d'un pixel, il est possible de retrouver ses coordonnées i,j dans le repère α, β par une simple règle de trois.

On comprend donc que dans la scène 80, à cause du choix de la position des projecteurs 82 et 84 vis-à-vis des objets 32 et 30 et du codage des couleurs dans l'image 104 projetée, chaque point de l'objet éclairé se voit affecté une couleur fonction de la position qu'il occupait dans l'image 44.

Une fois la construction de la scène 80 terminée, le module 20 procède à une étape 116 de synthèse d'une image 118 (figure 9) filmée à partir de la caméra 40 de la scène 80. L'image 118 est identique à l'image 46 à l'exception du fait que la couleur des différents pixels d'un objet est fonction de la position du point correspondant de l'objet dans l'image 44. En particulier, la position des objets 30 et 32 est identique à la position de ces mêmes objets dans l'image 46.

Lors de la synthèse de l'image 118, le sous-module 48 procède à une opération 119 de lissage des couleurs ainsi, les pixels de l'image 118 peuvent se voir affecter une couleur intermédiaire entre celles des pixels 106 de l'image 104. Ceci est rendu possible grâce au fait que le nombre de couleurs possible est supérieur au nombre de pixels de l'image. Dès lors, il est possible de mesurer des déplacements avec une précision inférieure au pixel comme on le comprendra à la lecture de la suite de cette description.

Une fois l'opération de synthèse de l'image 118 terminée, le module 50 calcule lors d'une étape 120, le champ de vecteurs de déplacement. A cet effet, il relève, lors d'une opération 122, la position et la couleur des pixels de l'image 118. Par exemple, il relève que la position d'un pixel 120 (figure 9) est (225 ;128) et que sa couleur est (599; 384).

Ensuite, il déduit, lors d'une opération 124, la position de ce pixel dans l'image 44 à partir de la couleur relevée. Par exemple, pour le pixel 120 il déduit que la couleur (599 ; 384) correspond à la position (199,6666;128) dans le repère α, β.

Finalement, lors d'une opération 126 il détermine le vecteur de déplacement de chaque pixel en soustrayant à la position relevée, la position initiale déduite lors de l'opération 124.

Par exemple, pour le pixel 120, le vecteur de déplacement est égal à (25,3333;0).

Les opérations 122 à 126 sont réitérées pour tous les pixels de chaque objet qui sont éclairés par l'un des projecteurs de la scène 80.

Une fois le champ de vecteurs de déplacement calculé, le module 52 construit, lors d'une étape 130, des images intermédiaires représentant les objets 30 et 32 à des instants intermédiaires entre les instants T et T+1. A cet effet, le module 52 met en oeuvre un processus d'interpolation temporelle et utilise le champ de vecteurs de déplacement calculé lors de l'étape 120.

Lors de cette étape 130, le module 52 construit au moins une image intermédiaire et de préférence plus de deux, cinq ou dix images intermédiaires entre les instants T et T+1.

Finalement, la séquence temporelle d'images formée par les images 44 et 46 synthétisées aux instants T et T+1 entre lesquelles sont intercalées des images intermédiaires construites lors de l'étape 130, est affiché sur l'écran 6.

L'étape 130 de construction d'une image intermédiaire par interpolation temporelle est plus rapide que la synthèse d'une image par le module 20. Dès lors, le procédé ci-dessus présente l'avantage d'être plus rapide que les procédés de synthèse d'images connus. En effet, les procédés de synthèses d'images connus synthétisent à l'aide du module 20 chacune des images d'une séquence temporelle d'images. Par conséquent, pour une séquence temporelle de sept images, le module 20 sera exécuté sept fois. Au contraire, dans le procédé de la figure 6, pour générer une séquence temporelle de sept images, le module 20 est activé trois fois respectivement pour générer les images 44, 46 et 118 tandis que les cinq images intermédiaires de la séquence temporelle sont construites par interpolation temporelle. Ainsi, il a été mesuré que le temps total nécessaire pour construire cette séquence temporelle de sept images à l'aide du procédé de la figure 6 est très nettement inférieur au temps nécessaire pour construire une séquence temporelle de sept images à l'aide des procédés de synthèse d'images connus.

Le procédé a été décrit dans le cas particulier où seule une image 118 est construite pour déterminer le champ de vecteurs de déplacement. En variante, le procédé de la figure 6 est modifié pour construire une image dans laquelle les couleurs des pixels indiquent la position des points des objets correspondant à l'instant T et une autre image dans laquelle les couleurs des pixels indiquent la position des points des objets à l'instant T+1. Pour construire ces deux images, l'étape 74 est réalisée en prenant une fois comme image de départ l'image prise à un instant T et comme image d'arrivée l'image prise à un instant T+1 et une seconde fois en prenant comme image de départ l'image prise à l'instant T+1 et comme image d'arrivée l'image prise à l'instant T. Dans cette variante, l'étape 120 est exécutée pour ces deux images de manière à obtenir deux champs de vecteurs de déplacement et l'étape 130 est précédée d'une étape consistant à calculer la moyenne pondérée de ces deux champs de vecteurs de déplacement. Le calcul du champ de vecteurs de déplacement une fois dans un sens, c'est-à-dire de l'instant T vers l'instant T+1, et une fois dans l'autre sens, c'est-à-dire de l'instant T+1 vers l'instant T, permet d'améliorer la précision du calcul du champ de vecteurs de déplacement.

## Revendications

1. Procédé de détermination du déplacement d'un pixel entre une première et une deuxième images de synthèse, lesdites images étant constituées d'un ensemble de pixels, la première image étant synthétisée à partir d'une première scène contenant un objet et un point de prise de vue donné, et la deuxième image étant synthétisée à partir d'une deuxième scène contenant le même objet, cette deuxième scène étant obtenue à partir de la première scène en déplaçant l'objet dans la première scène et/ou en déplaçant le point de prise de vue de la première scène,
**caractérisé :**
- **en ce qu'**il comporte avant la synthèse de la deuxième image, une étape de définition (en 76) de la couleur d'au moins un point de l'objet dans la deuxième scène en fonction de la position de ce point dans la première scène de manière à ce que la couleur du pixel de la deuxième image correspondant à ce point indique la position de ce point dans la première image, cette étape de définition comportant :
- une opération (92) de projection sur l'objet de la deuxième scène d'une troisième image (104) constituée d'un ensemble de pixels, dans laquelle la couleur de chaque pixel indique sa position dans cette troisième image, cette troisième image étant projetée à partir d'un projecteur dont la position relative par rapport à l'objet qu'il éclaire dans la deuxième scène est choisie pour être la même que la position relative du point de prise de vue par rapport à cet objet dans la première scène,
- une opération (88) de modification des aspects de surface de l'objet éclairé de manière à ce que la surface de cet objet diffuse l'éclairage du projecteur vers le point de prise de vue, et
- une opération (86) de suppression des sources de lumière parasites susceptibles de modifier la couleur diffusée par un ou plusieurs points de l'objet, et
- **en ce qu'**après la synthèse de la deuxième image à partir de la deuxième scène dans laquelle la couleur d'au moins un point de l'objet a été définie lors de l'étape de définition, il comporte pour ce ou chaque point de l'objet :
- une opération (122) de relevé de la position et de la couleur d'un pixel de la deuxième image correspondant à ce point,
- une opération (124) de déduction de la position du point de l'objet dans la première image à partir de la couleur relevée, et
- une opération (126) de détermination du déplacement de ce pixel à partir de la position relevée dans la deuxième image et de la position déduite de la couleur du pixel.

2. Procédé selon la revendication 1, **caractérisé en ce que** le nombre de couleurs possibles pour un pixel de la troisième image est strictement supérieur au nombre de pixels de la première image.

3. Procédé selon l'une quelconque des revendications précédentes, **caractérisé en ce que** la couleur des pixels de la troisième image est une fonction monotone croissante ou décroissante de la position du pixel dans cette troisième image.

4. Procédé selon la revendication 3, **caractérisé en ce que** la troisième image présente un gradient de couleur dans deux directions non colinéaires.

5. Procédé de synthèse d'images, chaque image étant formée d'un ensemble de pixels, ce procédé comportant :
- une première étape (70) de synthèse d'une première image à partir d'une première scène, la première image représentant, en outre, un objet dans la première scène prise à partir d'un point de prise de vue donné, et
- une deuxième étape (72) de synthèse d'une deuxième image à partir d'une deuxième scène, cette deuxième scène étant obtenue à partir de la première scène en déplaçant l'objet dans la première scène et/ou en déplaçant le point de prise de vue de la première scène,
**caractérisé en ce que** le procédé comporte :
- une étape (74, 120) de détermination du déplacement d'au moins un pixel entre les première et deuxième images, cette étape étant réalisée en mettant en oeuvre un procédé de détermination du déplacement d'un pixel conforme à l'une quelconque des revendications précédentes, et
- une étape (130) de construction par interpolation temporelle d'au moins une image intermédiaire entre les première et deuxième images synthétisées à l'aide des informations sur le déplacement du ou de chaque pixel précédemment déterminées.

6. Support d'enregistrement d'informations, **caractérisé en ce qu'**il comporte des instructions pour l'exécution d'un procédé conforme à l'une quelconque des revendications précédentes, lorsque ces instructions sont exécutées par un calculateur électronique.

7. Système de détermination du déplacement d'un pixel entre une première et une deuxième images de synthèse, lesdites images étant constituées d'un ensemble de pixels, la première image étant synthétisée à partir d'une première scène contenant un objet et un point de prise de vue donné, et la deuxième image étant synthétisée à partir d'une deuxième scène contenant le même objet, cette deuxième scène étant obtenue à partir de la première scène en déplaçant l'objet dans la première scène et/ou en déplaçant le point de prise de vue de la première scène, ce système comportant :
- un module (20) de synthèse d'images propre à générer des images à partir d'une scène tridimensionnelle, et
- un module (22) de commande apte à activer une première fois le module de synthèse pour générer la première image à partir de la première scène, et à activer une deuxième fois le module de synthèse pour générer la deuxième image à partir de la deuxième scène,
**caractérisé :**
- **en ce que** le module de commande est apte à définir automatiquement la couleur d'au moins un point de l'objet dans la deuxième scène en fonction de la position de ce point dans la première scène de manière à ce que la couleur du pixel de la deuxième image correspondant à ce point indique la position de ce pixel dans la première image, le module de commande étant apte pour cela à réaliser :
- une opération (92) de projection sur l'objet de la deuxième scène d'une troisième image (104) constituée d'un ensemble de pixels, dans laquelle la couleur de chaque pixel indique sa position dans cette troisième image, cette troisième image étant projetée à partir d'un projecteur dont la position relative par rapport à l'objet qu'il éclaire dans la deuxième scène est choisie pour être la même que la position relative du point de prise de vue par rapport à cet objet dans la première scène,
- une opération (88) de modification des aspects de surface de l'objet éclairé de manière à ce que la surface de cet objet diffuse l'éclairage du projecteur vers le point de prise de vue, et
- une opération (86) de suppression des sources de lumière parasites susceptibles de modifier la couleur diffusée par un ou plusieurs points de l'objet, et
- **en ce que** le système comporte un module (50) de calcul du déplacement d'au moins un pixel entre les première et deuxième images apte pour le ou chaque point de l'objet à :
- relever la position et la couleur d'un pixel de la deuxième image correspondant à ce point,
- déduire la position du point de l'objet dans la première image à partir de la couleur relevée, et
- déterminer le déplacement de ce pixel à partir de la position relevée dans la deuxième image et de la position déduite de la couleur du pixel.

## Claims

1. Method for determining the displacement of a pixel between a first and a second synthesised image, the images being constituted by a set of pixels, the first image being synthesised from a first scene containing an object and a specific viewpoint, and the second image being synthesised from a second scene containing the same object, this second scene being obtained from the first scene by displacing the object in the first scene and/or displacing the viewpoint of the first scene,
**characterised in that**:
- the method comprises, before the synthesis of the second image, a step for defining (at 76) the colour of at least one point of the object in the second scene in accordance with the position of this point in the first scene so that the colour of the pixel of the second image corresponding to this point indicates the position of this point in the first image, this definition step comprising:
- an operation (92) for projecting, on the object of the second scene, a third image (104) which is constituted by a set of pixels and in which the colour of each pixel indicates its position in this third image, this third image being projected from a projector whose relative position with respect to the object which it illuminates in the second scene is selected to be the same as the relative position of the viewpoint with respect to this object in the first scene,
- an operation (88) for modifying surface aspects of the illuminated object so that the surface of this object diffuses the illumination of the projector towards the viewpoint, and
- an operation (86) for suppressing parasitic light sources which are capable of modifying the colour diffused by one or more points of the object, and **in that**,
- after the synthesis of the second image from the second scene in which the colour of at least one point of the object was defined during the definition step, it comprises, for the or each point of the object:
- an operation (122) for recording the position and the colour of a pixel of the second image corresponding to this point,
- an operation (124) for deriving the position of the point of the object in the first image from the colour recorded, and
- an operation (126) for determining the displacement of this pixel from the position recorded in the second image and from the position derived from the colour of the pixel.

2. Method according to claim 1, **characterised in that** the number of possible colours for a pixel of the third image is strictly greater than the number of pixels of the first image.

3. Method according to either of the preceding claims,
**characterised in that** the colour of the pixels of the third image is an increasing or decreasing monotone function of the position of the pixel in this third image.

4. Method according to claim 3, **characterised in that** the third image has a colour gradient in two directions which are not co-linear.

5. Method for synthesising images, each image being formed by a set of pixels, this method comprising:
- a first step (70) for synthesising a first image from a first scene, the first image further representing an object in the first scene taken from a specific viewpoint, and
- a second step (72) for synthesising a second image from a second scene, this second scene being obtained from the first scene by displacing the object in the first scene and/or by displacing the viewpoint of the first scene,
**characterised in that** the method comprises:
- a step (74, 120) for determining the displacement of at least one pixel between the first and second images, this step being carried out by implementing a method for determining the displacement of a pixel in accordance with any one of the preceding claims, and
- a step (130) for constructing, by means of temporal interpolation, at least one intermediate image between the first and the second synthesised images using previously determined pieces of information relating to the displacement of the or each pixel.

6. Information recording medium, **characterised in that** it comprises instructions for carrying out a method in accordance with any one of the preceding claims, when these instructions are carried out by an electronic processor.

7. System for determining the displacement of a pixel between a first and a second synthesised image, the images being constituted by a set of pixels, the first image being synthesised from a first scene containing an object and a specific viewpoint and the second image being synthesised from a second scene containing the same object, this second scene being obtained from the first scene by displacing the object in the first scene and/or by displacing the viewpoint of the first scene, this system comprising:
- a module (20) for synthesising images which is capable of generating images from a three-dimensional scene, and
- a control module (22) which is capable of activating the synthesis module a first time in order to generate the first image from the first scene, and activating the synthesis module a second time in order to generate the second image from the second scene,
**characterised in that**:
- the control module is capable of automatically defining the colour of at least one point of the object in the second scene in accordance with the position of this point in the first scene so that the colour of the pixel of the second image corresponding to this point indicates the position of this pixel in the first image, the control module being capable, to this end, of carrying out:
- an operation (92) for projecting, on the object of the second scene, a third image (104) which is constituted by a set of pixels and in which the colour of each pixel indicates its position in this third image, this third image being projected from a projector whose relative position with respect to the object which it illuminates in the second scene is selected to be the same as the relative position of the viewpoint with respect to this object in the first scene,
- an operation (88) for modifying surface aspects of the illuminated object so that the surface of this object diffuses the illumination of the projector towards the viewpoint, and
- an operation (86) for suppressing parasitic light sources which are capable of modifying the colour diffused by one or more points of the object, and **in that**
- the system comprises a module (50) for calculating the displacement of at least one pixel between the first and second images, which is capable, for the or each point of the object, of:
- recording the position and the colour of a pixel of the second image corresponding to this point,
- deriving the position of the point of the object in the first image from the colour recorded, and
- determining the displacement of this pixel from the position recorded in the second image and from the position derived from the colour of the pixel.

## Patentansprüche

1. Verfahren zur Bestimmung der Verschiebung eines Pixels zwischen einem ersten und einem zweiten Synthesebild, wobei die Bilder von einer Pixelmenge gebildet sind, das erste Bild von einer ein Objekt und einen gegebenen Aufnahmepunkt enthaltenden ersten Szene und das zweite Bild von einer dasselbe Objekt enthaltenden zweiten Szene synthetisiert ist und wobei diese zweite Szene ausgehend von der ersten Szene durch Verschieben des Objekts in der ersten Szene und/oder durch Verschieben des Aufnahmepunktes der ersten Szene gewonnen wird,
**dadurch gekennzeichnet, daß**:
- es vor der Synthese des zweiten Bildes einen Schritt der Farbdefinition (bei 76) zumindest eines Punktes des Objekts in der zweiten Szene auf der Grundlage der Position dieses Punktes in der ersten Szene umfaßt, derart, daß die Farbe des diesem Punkt entsprechenden Pixels des zweiten Bildes die Position dieses Punktes im ersten Bild angibt, wobei dieser Definitionsschritt folgendes umfaßt:
- eine Operation (92) zur Projektion eines von einer Pixelmenge gebildeten dritten Bildes (104) auf das Objekt der zweiten Szene, wobei die Farbe jedes Pixels seine Position im dritten Bild angibt und das dritte Bild von einem Projektor projiziert wird, dessen Position in Bezug auf das Objekt, das er in der zweiten Szene beleuchtet, so gewählt ist, daß sie die gleiche ist wie die relative Position des Aufnahmepunktes in Bezug auf das Objekt in der ersten Szene,
- eine Operation (88) zur Modifizierung der Oberflächenaspekte des beleuchteten Objekts in der Weise, daß die Oberfläche diese Objekts die Beleuchtung des Projektors zum Aufnahmepunkt hin verteilt und
- eine Operation (86) zur Unterdrückung von Streulichtquellen, die in der Lage sind, die durch einen oder mehrere Punkte des Objekts verteilte Farbe zu verändern, und
- **dadurch**, daß es nach der Synthese des zweiten Bildes von der zweiten Szene, bei der die Farbe zumindest eines Punktes des Objekts in der Definitionsstufe definiert worden ist, folgendes für diesen oder jeden Punkt des Objekts umfaßt:
- eine Operation (122) zur Aufnahme der Position und der Farbe eines diesem Punkt entsprechenden Pixels des zweiten Bildes,
- eine Operation (124) zur Deduktion der Position des Punktes des Objekts im ersten Bild von der aufgenommenen Farbe und
- eine Operation (126) zur Bestimmung der Verschiebung des Pixels von der im zweiten Bild aufgenommenen Position und der deduzierten Position der Farbe des Pixels.

2. Verfahren nach Anspruch 1, **dadurch gekennzeichnet, daß** die Anzahl möglicher Farben für ein Pixel des dritten Bildes strikt größer ist als die Anzahl von Pixeln des ersten Bildes.

3. Verfahren nach einem der vorhergehenden Ansprüche, **dadurch gekennzeichnet, daß** die Farbe der Pixel des dritten Bildes eine monoton wachsende oder abnehmende Funktion der Position des Pixels im dritten Bild ist.

4. Verfahren nach Anspruch 3, **dadurch gekennzeichnet, daß** das dritte Bild einen Farbgradienten in zwei nicht-kolinearen Richtungen darbietet.

5. Verfahren zur Bildsynthese, wobei jedes Bild von einer Pixelmenge gebildet ist und das Verfahren folgendes umfaßt:
- einen ersten Schritt (70) zur Synthese eines ersten Bildes von einer ersten Szene, wobei das erste Bild außerdem ein Objekt in der ersten Szene darstellt, das von einem gegebenen Aufnahmepunkt aufgenommen ist, und
- einen zweiten Schritt (72) zur Synthese eines zweiten Bildes von einer zweiten Szene, wobei diese zweite Szene von der ersten Szene unter Verschiebung des Objekts in der ersten Szene und/oder durch Verschiebung des Aufnahmepunktes der ersten Szene gewonnen wird,
**dadurch gekennzeichnet, daß** das Verfahren folgendes umfaßt:
- einen Schritt (74,120) zur Bestimmung der Verschiebung zumindest eines Pixels zwischen dem ersten und dem zweiten Bild, wobei dieser Schritt **dadurch** ausgeführt wird, daß ein Verfahren zur Bestimmung der Verschiebung eines Pixels einem der vorhergehenden Ansprüche eingesetzt wird, und
- einen Schritt (130) zur Ausarbeitung durch zeitliche Interpolation zumindest eines Zwischenbildes zwischen dem ersten dem zweiten Bild, die mit Hilfe von Informationen über die zuvor bestimmte Verschiebung des oder jedes Pixels synthetisiert worden sind.

6. Medium zur Informationsaufzeichnung, **dadurch gekennzeichnet, daß** es Instruktionen zur Ausführung eines Verfahrens nach einem der vorhergehenden Ansprüche umfaßt, wobei diese Instruktionen von einem elektronischen Rechner ausgeführt werden.

7. System zur Bestimmung der Verschiebung eines Pixels zwischen einem ersten und einem zweiten Synthesebild, wobei die Bilder von einer Pixelmenge gebildet sind, das erste Bild von einer ein Objekt und einen gegebenen Aufnahmepunkt enthaltenden ersten Szene und das zweite Bild von einer dasselbe Objekt enthaltenden zweiten Szene synthetisiert ist, wobei diese zweite Szene von der ersten Szene durch Verschiebung des Objekts in der ersten Szene und/oder durch Verschiebung des Aufnahmepunktes der ersten Szene gewonnen wird, und wobei dieses System folgendes umfaßt:
- einen zum Erzeugen von Bildern von einer dreidimensionalen Szene geeigneten Bildsynthesemodul (20) und
- einen Steuermodul (22), dazu geeignet, ein erstes Mal den Synthesemodul zum Erzeugen des ersten Bildes von der ersten Szene zu aktivieren und den Synthesemodul zum Erzeugen des zweiten Bildes von der zweiten Szene ein zweites Mal zu aktivieren,
**dadurch gekennzeichnet,**
- **daß** der Steuermodul in der Lage ist, automatisch die Farbe zumindest eines Punktes des Objekts in der zweiten Szene auf der Grundlage der Position dieses Punktes in der ersten Szene zu definieren, derart, daß die diesem Punkt entsprechende Farbe des Pixels im zweiten Bild die Position dieses Pixels im ersten Bild angibt, wobei der Steuermodul hierzu geeignet ist, folgendes auszuführen:
- eine Operation (92) zur Projektion eines von einer Pixelmenge gebildeten dritten Bildes auf das Objekt der zweiten Szene (104), wobei die Farbe jedes Pixels seine Position in diesem dritten Bild anzeigt und dieses dritte Bild von einem Projektor aus projiziert wird, dessen Relativstellung in Bezug auf das Objekt, das er in der zweiten Szene beleuchtet, so gewählt ist, daß sie die gleiche ist wie die Relativstellung des Aufnahmepunktes in Bezug auf dieses Objekt in der ersten Szene,
- eine Operation (88) zur Modifikation der Oberflächenaspekte des beleuchteten Objekts, derart, daß die Oberfläche des Objekts die Beleuchtung des Projektors zum Aufnahmepunkt hin verteilt, und
- eine Operation (86) zur Unterdrückung der Streulichtquellen, die in der Lage sind, die von einem oder mehreren Punkten des Objektes verteilte Farbe zu modifizieren, und
- **dadurch**, daß das System einen Modul zur Berechnung der Verschiebung zumindest eines Pixels zwischen dem ersten und zweiten Bild umfaßt, mit der Fähigkeit, für den oder jeden Punkt des Objekts,
- die Position und die Farbe eines Pixels des zweiten Bildes entsprechend diesem Punkt aufzunehmen,
- die Position des Punktes des Objekts im ersten Bild von der aufgenommen Farbe zu deduzieren, und
- die Verschiebung dieses Pixels von der aufgenommenen Position im zweiten Bild und der deduzierten Position der Farbe des Pixels zu bestimmen.
